(19)

Europäisches
Patentamt
European
Patent Office
Office européen
des brevets

(11) **EP 2 128 456 A2**

(12) **EUROPEAN PATENT APPLICATION**

(43) Date of publication:
 **02.12.2009 Bulletin 2009/49**

(51) Int Cl.:
 **F15B 15/28** (2006.01)  **F16D 25/08** (2006.01)

(21) Application number: **09251263.1**

(22) Date of filing: **06.05.2009**

(84) Designated Contracting States:
 **AT BE BG CH CY CZ DE DK EE ES FI FR GB GR
 HR HU IE IS IT LI LT LU LV MC MK MT NL NO PL
 PT RO SE SI SK TR**

(30) Priority: **26.05.2008 JP 2008136700**

(71) Applicant: **Toyota Jidosha Kabushiki Kaisha
 Toyota-shi, Aichi-ken 471-8571 (JP)**

(72) Inventors:
 • **Ido, Daisuke
  Toyota-shi
  Aichi-ken 475-8571 (JP)**
 • **Inoue, Minetaka
  Kariya
  Aichi 448-8605 (JP)**

(74) Representative: **Albutt, Anthony John
 D Young & Co
 120 Holborn
 London EC1N 2DY (GB)**

(54) **Piston position detector**

(57)     A stroke sensor (40a) and a stroke sensor (40b) are arranged at positions rotated by 120 degrees in a plane perpendicular to a direction in which a slave cylinder sliding portion (36b) operates. Thus, a position at which the slave cylinder sliding portion (36b) operates may be respectively measured at positions (rotated by 120 degrees) about the center of a cross section of the slave cylinder sliding portion (36b). Even when the slave cylinder sliding portion (36b) is inclined by a diaphragm spring, an error of an operating position due to the inclination is complemented by a plurality of detected results to accurately detect the position of the slave cylinder sliding portion (36b), thus making it possible to reduce errors.

# F I G . 4

**Description**

BACKGROUND OF THE INVENTION

1. Field of the Invention

The invention relates to a piston position detector that reduces an error in detecting a position of a piston.

2. Description of the Related Art

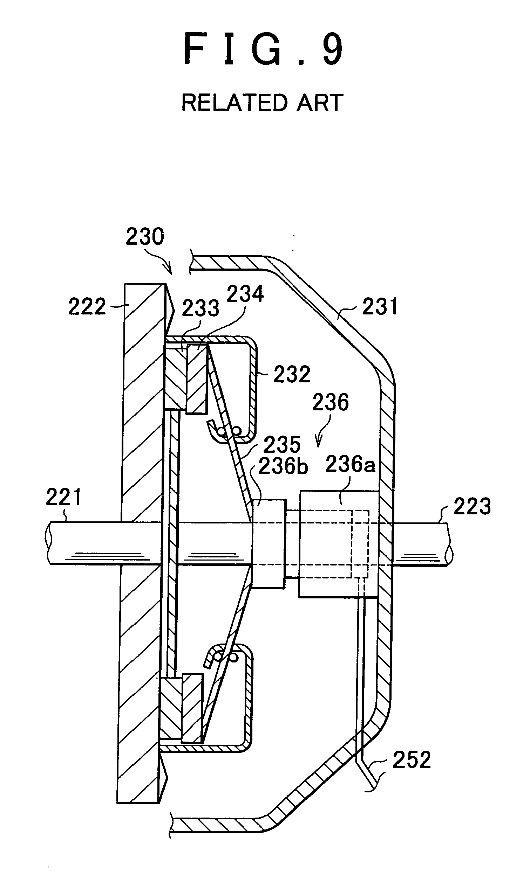

Some vehicles transmit the power of an engine to a transmission mechanism via a friction clutch. The friction clutch will he schematically described below. FIG.9 is a schematic block configuration diagram that shows a friction clutch. A clutch 230 transmits the rotation of a crankshaft 221, which is an output shaft of an engine, to an input shaft 223 of a transmission or interrupts transmission of the rotation.

As shown in FIG 9, a flywheel 222 is connected to the crankshaft 221, which is the output shaft of the engine, so that the flywheel 222 is integrally rotatable with the crankshaft 221. A clutch cover 232 is connected to the flywheel 222 so that the clutch cover 232 is integrally rotatable with the flywheel 222. On the other hand, a clutch disc 233 is spline-connected to the input shaft 223 of the transmission. Thus, the clutch disc 233 is slidable in the axial direction of the input shaft 223 while being integrally rotated with the input shaft 223.

A pressure plate 234 is arranged between the clutch disc 233 and the clutch cover 232. The pressure plate 234 is urged toward the flywheel 222 by an outer peripheral portion of the diaphragm spring 235. Because of the urging, a frictional force is generated between the pressure plate 234 and the clutch disc 233 and between the clutch disc 233 and the flywheel 222. Owing to the generated frictional force, the clutch 230 is placed in a so-called engaged (coupled) state, and the pressure plate 234, the clutch disc 233 and the flywheel 222 rotate integrally. In this manner, the power of the engine is transmitted to the transmission.

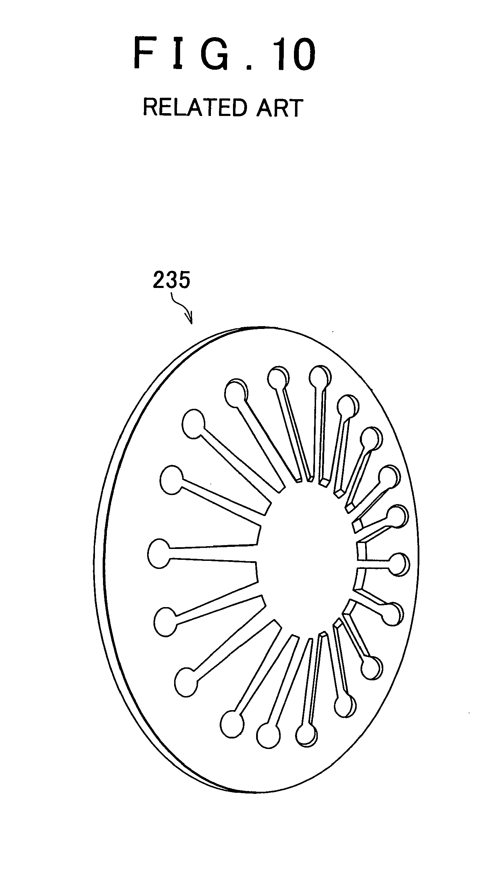

Here, FIG 10 shows a perspective view of the diaphragm spring, and the urging principles of the diaphragm spring will be described. As shown in FIG 10, the diaphragm spring 235 has a disk-shape as a whole with a raised center portion. More specifically, the diaphragm spring 235 has an annular outer peripheral portion, and a plurality of lingual fingers radially extend from the inner peripheral side of the annular outer peripheral portion toward the center.

In this way, the diaphragm spring 235 has the raised center portion. When the boundary (hereinafter, referred to as finger proximal portion) between the annular outer peripheral portion and the lingual fingers is held, and the distal end portions of the lingual fingers (hereinafter, referred to as lingual finger distal end portions), corresponding to the center portion of the diaphragm spring 235, are pressed, the outer peripheral portion pivots on the finger proximal portion in a direction opposite to the direction in which the finger distal end portions are pressed. Then, when the force pressing the finger distal end portions is released, the diaphragm spring 235 returns to the original shape. In this way, the diaphragm spring 235 pivots on the finger proximal portion to produce the spring effect. Thus, the diaphragm spring is also called a coned disc spring or a disc spring.

Referring back to FIG 9, in the clutch 230, the finger proximal portion of the diaphragm spring 235 is held by the end portion of the clutch cover 232, the finger distal end portions are pressed against a slave cylinder 236, and the outer peripheral portion is pressed against the pressure plate 234.

The slave cylinder 236 has an annular slave cylinder proximal portion 236a and an annular slave cylinder sliding portion 236b. The input shaft 223 of the transmission extends through the center portion of the slave cylinder proximal portion 236a and the center portion of the slave cylinder sliding portion 236b. The slave cylinder proximal portion 236a is fixed to a clutch housing 231, and forms a cylinder inside. Hydraulic fluid is supplied to or discharged from the cylinder. One end of the slave cylinder sliding portion 236b is pressed against the finger distal end portions of the diaphragm spring 235, and the other end of the slave cylinder sliding portion 236b is accommodated in the cylinder of the slave cylinder proximal portion 236a. The slave cylinder sliding portion 236b is slidable in the axial direction of the input shaft 223 of the transmission on the basis of the amount of hydraulic fluid supplied to or discharged from the cylinder.

Thus, hydraulic fluid is supplied into the cylinder of the slave cylinder proximal portion 236a via a hydraulic fluid passage 252 to move the slave cylinder sliding portion 236b toward the engine. As the slave cylinder sliding portion 236b moves toward the engine, the finger distal end portions of the diaphragm spring 235 are pressed. Because the finger proximal portion of the diaphragm spring 235 is held by the clutch cover, the outer peripheral portion of the diaphragm spring 235 is moved toward the transmission. By so doing, the pressure plate 234 loses the force pressing the clutch disc 233 against the flywheel 222 to disengage the clutch 230, thus releasing power transmission from the engine to the transmission.

In addition, the amount of hydraulic fluid supplied into the cylinder of the slave cylinder proximal portion 236a is adjusted to adjust the force by which the pressure plate 234 presses the clutch disc 233, thus obtaining a so-called half clutch state, that is, a state where the clutch disc 233 slides on the flywheel 222.

In the vehicles that transmit the power of the engine to the transmission mechanism via the friction clutch, some practically-used vehicles are equipped with a so-called automatic transmission mechanism in which the transmission mechanism automatically shifts gears on the basis of an operating state (vehicle speed, accelerator operation amount, engine rotational speed, and the like). In the vehicles equipped with the above automatic transmission mechanism, it is necessary to automatically engage or disengage the clutch in accordance with a shift control of the transmission mechanism, and an automatic clutch is provided to automatically engage or disengage the clutch. In addition, some practically-used vehicles are equipped with an automatic clutch that automatically engages or disengages the clutch on the basis of a start operation or a shift operation but the transmission mechanism is operated manually.

In such an automatic clutch, to smoothly control engagement and disengagement of the clutch, it is necessary to accurately acquire a clutch stroke from the disengaged state of the clutch through the half clutch state to the engaged state. Thus, it is necessary to include a piston position detector (clutch stroke sensor) for detecting a clutch stroke.

Such a piston position detector, for example, includes an induction-type piston position detector that uses an electromagnetic coil. The piston position detector is formed of a coil and a magnetic sensor. The coil is formed in the piston that moves inside the cylinder. The magnetic sensor is provided for the cylinder. As the piston moves while an electric current is being supplied to the coil, movement of the coil formed in the piston generates an induced electric current at the magnetic sensor side. The magnetic sensor detects the value of the induced electric current, thus making it possible to detect a position of the piston.

In addition, for example, Japanese Patent Application Publication No. 8-145611 (JP-A-8-145611) also suggests a piston position detector that prevents inaccurate position detection due to an external magnetic field, or the like, even when a magnetic field from the piston, of which the position is detected, is weak.

However, there is a problem that the above described piston position detector cannot handle a problem in terms of manufacturing of the diaphragm spring.

That is, engagement/disengagement of the clutch causes a large difference in force even with a small stroke. Thus, engagement/disengagement of the clutch requires precise accuracy and, of course, piston position detection also requires precise accuracy. However, it is difficult to precisely machine the height of the center portion of the disc, that is, the height of each of the lingual finger distal end portions, when the diaphragm spring is manufactured. Thus, one end portion of the slave cylinder sliding portion, which is pressed against the diaphragm spring, is not parallel to the face of the clutch disc.

Therefore, there is a problem that, however the detection accuracy of the piston position detector is improved, there is a limit to accurately acquire a clutch stroke position.


SUMMARY OF THE INVENTION

The invention provides a piston position detector that is able to reduce errors in detecting a position of a piston for detecting a clutch stroke position.

An aspect of the invention provides a piston position detector. The piston position detector includes: detecting means having a plurality of detecting units, each of which outputs a detected value corresponding to a position of a piston in a direction in which the piston operates; and position determination means that determines the position of the piston in the direction in which the piston operates on the basis of the detected values output respectively from the plurality of detecting units. The plurality of detecting units include a first detecting unit and a second detecting unit that are arranged at different positions in a plane perpendicular to the direction in which the piston operates.

With the above configuration, the plurality of detecting units include a first detecting unit and a second detecting unit that are arranged at different positions in a plane perpendicular to the direction in which the piston operates. Thus, even when the piston operates while being inclined with respect to a plane perpendicular to the direction in which the piston operates, it is possible to measure positions, at which the piston operates, respectively by detecting units arranged at different angular positions about the center of the cross section of the piston. As a result, for example, when errors in piston position detection due to the inclined piston are complemented by a plurality of detected results, it is possible to accurately detect the position of the piston and reduce errors.

In the piston position detector according to the aspect of the invention, the first detecting unit and the second detecting unit each may output a detected value corresponding to a position of a common position determination reference plane provided on the piston.

With the above configuration, it is possible to absorb errors with respect to the same target to accurately detect the position of the piston, thus making it possible to reduce errors.

Furthermore, the first detecting unit and the second detecting unit may be provided in substantially the same plane perpendicular to the direction in which the piston operates.

With the above configuration, a runout of the piston in the same plane may be detected at a plurality of positions. Hence, it is possible to reduce errors by easily absorbing errors and accurately detecting the position of the piston.

Moreover, the barycenter of positions of the plurality of detecting units provided in substantially the same plane perpendicular to the direction in which the piston operates may coincide with the center of a cross section of the piston, the cross section being perpendicular to the direction in which the piston operates.

With the above configuration, the results detected by the plurality of detecting units cancel errors due to a runout of the piston each other to accurately detect the position of the piston, thus making it possible to reduce errors.

According to the aspect of the invention, even when the piston operates while being inclined with respect to a plane perpendicular to the direction in which the piston operates, it is possible to measure positions, at which the piston operates, respectively by detecting units arranged at different angular positions about the center of the cross section of the piston. As a result, for example, when errors in piston position detection due to the inclined piston are complemented by a plurality of detected results, it is possible to provide a piston position detector that accurately detects the position of the piston and reduces errors.

BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:

FIG 1 is a schematic block diagram of a vehicle that uses a result, detected by a piston position detector according to an embodiment of the invention, in engagement and disengagement of a clutch;

FIG 2 is a schematic block diagram of the clutch according to the embodiment of the invention;

FIG 3 is an enlarged cross-sectional view of a slave cylinder according to the embodiment of the invention;

FIG. 4 is a cross-sectional view of the slave cylinder with arrangement of stroke sensors according to the embodiment of the invention;

FIG 5 is a graph that shows theoretically detected stroke positions when a slave cylinder sliding portion is uniformly inclined;

FIG 6 is a graph that shows stroke positions detected by stroke sensors in an actual vehicle;

FIG 7 is a graph that shows noise attenuation data obtained by averaging stroke position values detected by two stroke sensors;

FIG 8A and FIG 8B each show an arrangement view in which a plurality of stroke sensors are arranged so that the barycenter of positions of the plurality of stroke sensors coincides with the center of the cross section of the slave cylinder sliding portion, in which FIG 8A is an arrangement view when two stroke sensors are arranged at positions rotated by 180 degrees, and FIG 8B is an arrangement view when three stroke sensors are respectively arranged at positions rotated by 120 degrees;

FIG 9 is a schematic block diagram that shows an existing friction clutch; and

FIG 10 is a perspective view of a diaphragm spring.

DETAILED DESCRIPTION OF EMBODIMENTS

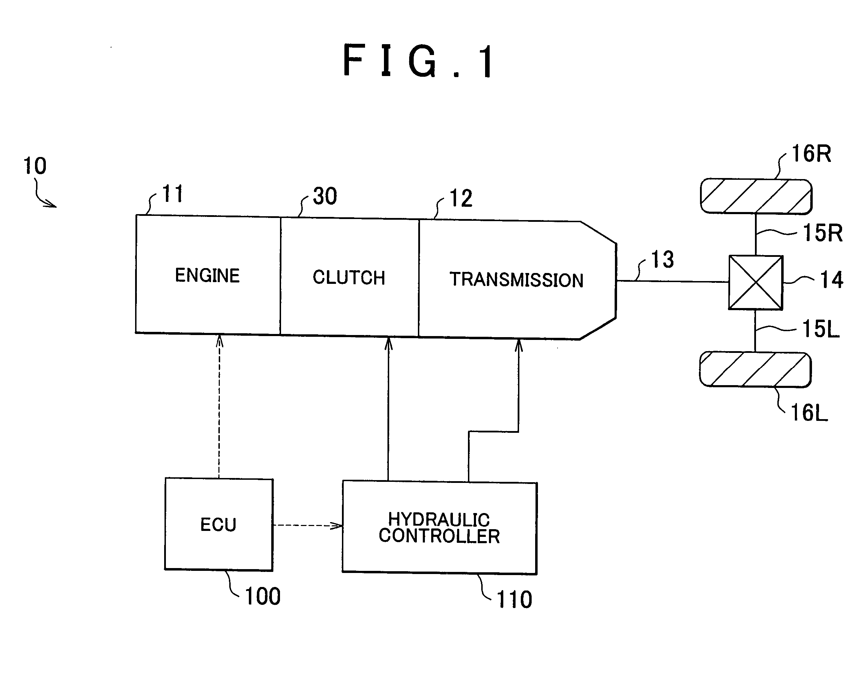

Hereinafter, an embodiment of the invention will be described with reference to the accompanying drawings. First, the configuration will be described. FIG 1 is a schematic block diagram of a vehicle that uses a result, detected by a piston position detector according to the embodiment of the invention, in engagement and disengagement of a clutch.

As shown in FIG 1, a vehicle 10 includes an engine 11, a transmission 12, a shaft 13, a differential gear 14 , drive shafts 15L and 15R, drive wheels 16L and 16R, a clutch 30, a hydraulic controller 110, and a vehicle electronic control unit (hereinafter, referred to as ECU) 100. The engine 11 is a power unit. The transmission 12 inputs a rotational torque from the engine 11 and changes a rotational speed. The shaft 13 transmits the torque output from the transmission 12. The differential gear 14 transmits the torque output from the shaft 13 while allowing a difference between right and left transmission torques. The drive shafts 15L and 15R, which serve as driving axles, respectively transmit the torques output from the differential gear 14. The drive wheels 16L and 16R are rotated by the torques transmitted through the drive shafts 15L and 15R to drive the vehicle 10. The clutch 30 transmits or interrupts the power output from the engine 11 to the transmission 12. The hydraulic controller 110 controls the clutch 30 and the transmission 12 by hydraulic pressure. The ECU 100 controls the vehicle 10 overall.

The engine 11 is a known power unit that bums hydrocarbon fuel, such as gasoline or light oil, to output power. In addition, various sensors (not shown) are provided for the engine 11 to detect an operating state of the engine 11.

Signals detected by the various sensors provided for the engine 11 are input to the ECU 100. The ECU 100 executes drive control, such as fuel injection control, ignition control and intake air amount adjustment control, on the engine 11 on the basis of those signals.

The transmission 12 includes two planetary gear sets. These planetary gear sets include a plurality of clutches and brakes that are controlled for engagement by an hydraulic actuator. These clutches and brakes each are placed in any one of an engaged state or a released state on the basis of excitation or de-excitation of a transmission solenoid and linear solenoid of the hydraulic controller 110 and a hydraulic circuit that is switched in accordance with an operation state of a manual valve. Thus, the transmission 12 provides a gear corresponding to a combination of an engaged state and released state of these clutches and brakes.

With the above configuration, the transmission 12 is a step-gear transmission that reduces or increases rotation input from the engine 11 at a predetermined gear ratio γ and outputs the rotation. The transmission 12 selectively establishes any one of a forward gear, a reverse gear, a parking position, and a neutral position, and converts the speed in accordance with the respective gear ratios γ.

The differential gear 14 allows a difference in rotational speed between the left drive wheel 16L and the right drive wheel 16R at the time of running at a curve. In addition, a vehicle speed sensor is provided for the drive shaft 15L (or the drive shaft 15R). The vehicle speed sensor detects a rotational speed of the drive shaft 15L (or the drive shaft 15R). A signal detected by the vehicle speed sensor is input to the ECU 100. Instead, the vehicle speed sensor may be provided for the shaft 13 to detect a rotational speed of the shaft 13, thus obtaining a vehicle speed.

The hydraulic controller 110 includes a plurality of transmission solenoids S, linear solenoids SLT and SLU. The hydraulic controller is controlled by the ECU 100, and controls the transmission 12 and the clutch 30 by hydraulic pressure. The plurality of transmission solenoids S operate at respective gear shifts. The linear solenoid SLT controls a line pressure and a back pressure of an accumulator (not shown).

Friction elements of the transmission 12 are selectively engaged or released by hydraulic pressure, which is regulated from a line pressure as a source pressure, on the basis of operation states of the plurality of transmission solenoids S and the linear solenoids SLT and SLU. The ratio in rotational speed between the input shaft and output shaft of a transmission mechanism is changed through a combination of engagement and release of these friction elements to form a gear.

The ECU 100 includes a central processing unit (CPU) (not shown), a read only memory (ROM), a random access memory (RAM) and an input/output interface.

In addition, the ECU 100 is connected to stroke sensors (discussed later), an engine rotational speed sensor (not shown), a vehicle speed sensor, and the like. Signals that indicate a position of the slave cylinder sliding portion, an engine rotational speed Ne and a vehicle speed V are input to the ECU 100. The ECU 100 detects an engagement state of the clutch 30, a running state or operating state of the vehicle 10, or the like, on the basis of the input signals.

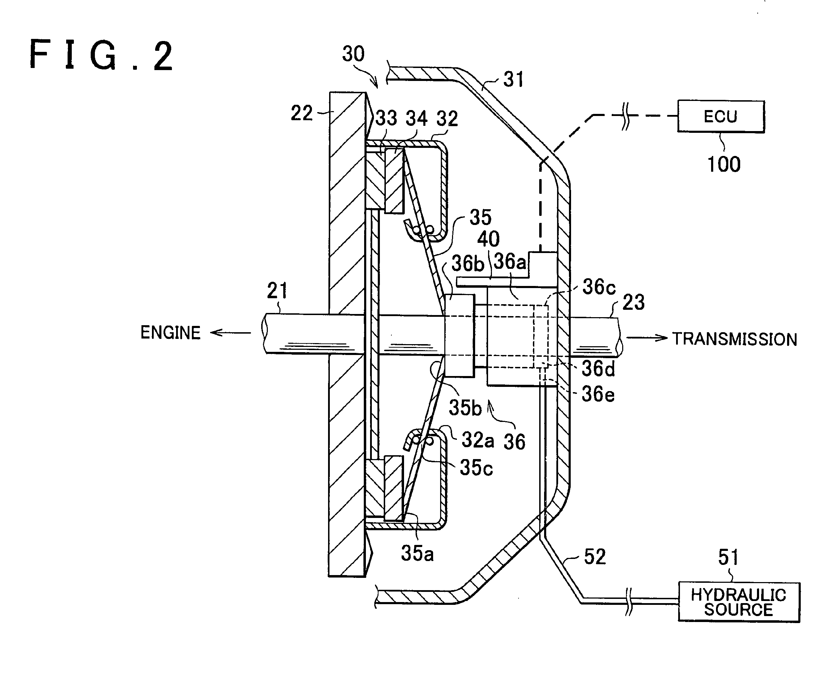

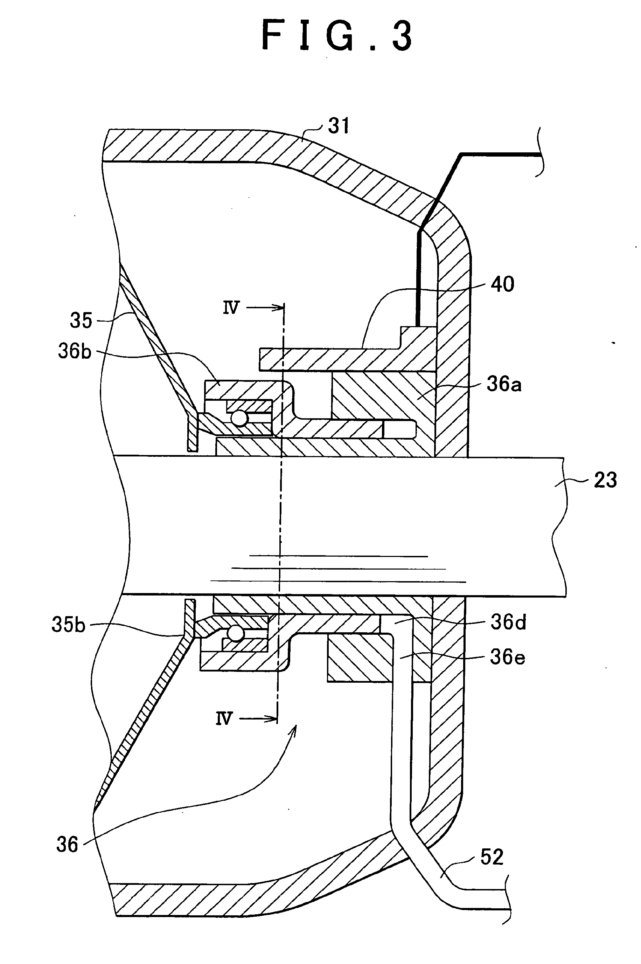

Next, the clutch 30 will be described. FIG 2 is a schematic block diagram of the clutch according to the embodiment of the invention. FIG 3 is an enlarged cross-sectional view of a slave cylinder according to the embodiment of the invention.

As described above, the clutch 30 is provided between the engine 11 and the transmission 12. In addition, as shown in FIG. 2, the clutch 30 is accommodated in the clutch housing 31.

A flywheel 22 is connected to a crankshaft 21, which is the output shaft of the engine 11, so that the flywheel 22 is integrally rotatable with the crankshaft 21. A clutch cover 32 is connected to the flywheel 22 so that the clutch cover 32 is integrally rotatable with the flywheel 22. On the other hand, a clutch disc 33 is spline-connected to the input shaft 23 of the transmission 12. Thus, the clutch disc 33 is slidable in the axial direction of the input shaft 23 of the transmission 12 while being integrally rotated with the input shaft 23.

A pressure plate 34 is arranged between the clutch disc 33 and the clutch cover 32. The pressure plate 34 is in contact with an outer peripheral portion 35a of the diaphragm spring 35, and is urged toward the flywheel 22 by the diaphragm spring 35. Because of the urging, a frictional force is generated between the pressure plate 34 and the clutch disc 33 and between the clutch disc 33 and the flywheel 22. Owing to the generated frictional forces, the clutch 30 is placed in a so-called engaged (coupled) state, and the pressure plate 34, the clutch disc 33 and the flywheel 22 rotate integrally. In this manner, the power of the engine 11 is transmitted to the transmission 12.

On the other hand, the center portion of the diaphragm spring 35 is in contact with the slave cylinder 36, a middle portion between the center portion and the outer peripheral portion 35a is held by an end portion 32a of the clutch cover 32.

Here, the diaphragm spring 35 will be described. The diaphragm spring 35 has a disk-shape as a whole with the raised center portion. More specifically, the diaphragm spring 35 has an annular outer peripheral portion, and a plurality of lingual fingers radially extend from the inner peripheral side of the annular outer peripheral portion toward the center.

In this way, the diaphragm spring 35 has such a structure that finger distal end portions 35b are raised. When a boundary 35c (hereinafter, referred to as finger proximal portion) between the annular outer peripheral portion 35a and the lingual fingers is held, and the distal ends of the lingual fingers 35b (hereinafter, referred to as finger distal end portions), corresponding to the center portion of the diaphragm spring 35, are pressed, the outer peripheral portion 35a pivots on the finger proximal portion 35c in a direction opposite to the direction in which the finger distal end portions 35b are pressed. Then, when the force pressing the finger distal end portions 35b are released, the diaphragm spring 235 returns to the original shape. In this way, the diaphragm spring 35 pivots on the finger proximal portion 35c to produce the spring effect. Thus, the diaphragm spring is also called a coned disc spring or a disc spring.

Thus, when the finger distal end portions 35b of the diaphragm spring 35 are pressed toward the flywheel 22, the outer peripheral portion 35a pivots on the finger proximal portion 35c, held by the end portion 32a of the clutch cover 32, toward the transmission 12. Thus, no frictional force acts between the pressure plate 34 and the clutch disc 33 and between the clutch disc 33 and the flywheel 22 to disengage the clutch 30.

On the other hand, the slave cylinder 36 has an annular slave cylinder proximal portion 36a and an annular slave cylinder sliding portion 36b. The input shaft 23 of the transmission 12 extends through the center portion of the slave cylinder proximal portion 36a and the center portion of the slave cylinder sliding portion 36b. The transmission 12 side of the slave cylinder proximal portion 36a is fixed to the clutch housing 31, and has a hollow portion 36c that is open toward the flywheel 22. The slave cylinder sliding portion 36b is accommodated in the hollow portion 36c of the slave cylinder proximal portion 36a. Thus, a hydraulic fluid chamber 36d is formed between the slave cylinder proximal portion 36a and the slave cylinder sliding portion 36b. In addition, as described above, the finger distal end portions 35b of the diaphragm spring 35 are in contact with the flywheel 22 side of the slave cylinder sliding portion 36b.

Furthermore, a communication passage 36e is formed in the slave cylinder proximal portion 36a. The communication passage 36e supplies hydraulic fluid to the hydraulic fluid chamber 36d and discharges hydraulic fluid from the hydraulic fluid chamber 36d. In addition, the hydraulic fluid chamber 36d communicates with a hydraulic source 51 via the communication passage 36e and a hydraulic fluid passage 52. In addition, a fluid passage switching valve (not shown) is provided for the hydraulic fluid passage 52, and the hydraulic controller 110 is able to switch between supply and discharge of hydraulic fluid.

When hydraulic fluid is supplied to the hydraulic fluid chamber 36d of the slave cylinder 36, the slave cylinder sliding portion 36b is moved toward the flywheel 22 to press the finger distal end portions 35b of the diaphragm spring 35. When the finger distal end portions 35b of the diaphragm spring 35 are pressed, the outer peripheral portion 35a of the diaphragm spring 35 pivots toward the transmission 12 as described above. Thus, the pressure plate 34 releases pressing force toward the flywheel 22 to disengage the clutch 30.

Conversely, when hydraulic fluid is discharged from the hydraulic fluid chamber 36d of the slave cylinder 36, no pressing force acts on the slave cylinder sliding portion 36b toward the flywheel 22. Thus, the restoring force of the diaphragm spring 35 presses the slave cylinder sliding portion 36b back toward the transmission 12. In addition, the restoring force of the diaphragm spring 35 causes the outer peripheral portion 35a of the diaphragm spring 35 to press the pressure plate 34 toward the flywheel 22. By so doing, frictional force is generated between the pressure plate 34 and the clutch disc 33 and between the clutch disc 33 and the flywheel 22 to engage the clutch 30.

In addition, the amount of hydraulic fluid supplied to or discharged from the hydraulic fluid chamber 36d of the slave cylinder 36 is adjusted to adjust the force by which the pressure plate 34 presses the clutch disc 33, thus making it possible to adjust the engagement state to a so-called half clutch state, that is, a state where the clutch disc 33 slides on the flywheel 22.

Furthermore, the clutch 30 includes a stroke sensor 40 that detects a position of the slave cylinder sliding portion 36b. The stroke sensor 40 is fixed to the clutch housing 31 and the slave cylinder proximal portion 36a, and detects a position of the slave cylinder sliding portion 36b in the axial direction of the input shaft 23 of the transmission 12. The stroke sensor 40 inputs a detected position signal indicating a detected position of the slave cylinder sliding portion 36b to the ECU 100.

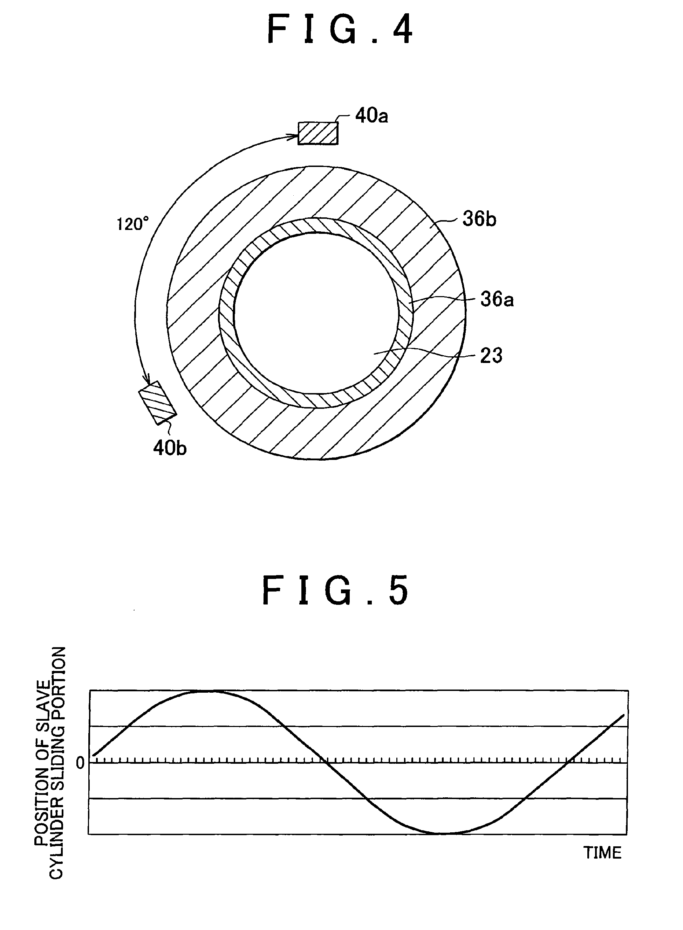

FIG 4 is a cross-sectional view of the slave cylinder with arrangement of stroke sensors according to the embodiment of the invention. The positions at which the stroke sensors are arranged will be described. In addition, FIG 4 is a cross-sectional view that is taken along the line IV-IV in FIG. 3.

As shown in FIG 4, one stroke sensor 40a is provided vertically with respect to the slave cylinder sliding portion 36b, and the other stroke sensor 40b is provided at a position rotated by 120 degrees from the stroke sensor 40a about the center of the slave cylinder sliding portion 36b. In addition, the stroke sensor 40a and the stroke sensor 40b are provided in the same plane that is perpendicular to a direction in which the slave cylinder sliding portion 36b operates. In addition, measurement positions at which the stroke sensor 40a and the stroke sensor 40b detect a position of the slave cylinder sliding portion 36b are provided in the same plane that is perpendicular to the direction in which the slave cylinder sliding portion 36b operates.

Piston position signals detected by the thus configured stroke sensor 40a and stroke sensor 40b are input to the ECU 100. The ECU 100 calculates an average value of piston positions obtained from the input piston position signals detected by the stroke sensor 40a and the stroke sensor 40b to calculate a stroke of the slave cylinder sliding portion 36b.

With the above described positions at which the stroke sensor 40a and the stroke sensor 40b are arranged, even when the heights of the finger distal end portions 35b of the diaphragm spring 35 shown in FIG 2 are not equal and the face of the clutch disc 33 is not parallel to the face of the slave cylinder sliding portion 36b, which contacts the diaphragm spring 35, position detection is possible both at a position distanced from the face of the clutch disc 33 and at a position close to the face of the clutch disc 33 due to the inclined slave cylinder sliding portion 36b. Thus, it is possible to reduce errors in detecting a position of the slave cylinder sliding portion 36b.

Hereinafter, a characteristic configuration of the vehicle 10 according to the embodiment of the invention will be described. The stroke sensor 40 includes the stroke sensor 40a and the stroke sensor 40b, each of which outputs a detected value corresponding to a position of the slave cylinder sliding portion 36b in the direction in which the slave cylinder sliding portion 36b operates. In addition, the stroke sensor 40a and the stroke sensor 40b are arranged at different positions in a plane perpendicular to the direction in which the slave cylinder sliding portion 36b operates.

In addition, the stroke sensor 40a and the stroke sensor 40b each output a detected value corresponding to a position of a common position determination reference plane provided for the slave cylinder sliding portion 36b. Here, the position determination reference plane is a plane that is perpendicular to the direction in which the slave cylinder sliding portion 36b operates and that has a set detection target for detecting a position, at which the slave cylinder sliding portion 36b operates, by the stroke sensor 40a and the stroke sensor 40b.

In addition, the stroke sensor 40a and the stroke sensor 40b are provided in substantially the same plane perpendicular to the direction in which the slave cylinder sliding portion 36b operates. Furthermore, when the plurality of stroke sensors 40a and 40b are provided, the barycenter of the positions at which the plurality of stroke sensors 40a and 40b are arranged desirably coincides with the center of the cross section of the slave cylinder sliding portion 36b, taken perpendicularly to the direction in which the slave cylinder sliding portion 36b operates. That is, the stroke sensor 40 may be regarded as detecting means according to the aspects of the invention, and the stroke sensor 40a and the stroke sensor 40b may be regarded as detecting units according to the aspects of the invention.

In addition, a stroke sensor 40c (discussed later) may also be regarded as a detecting unit according to the aspects of the invention. In addition, when the plurality of stroke sensors 40a, 40b and 40c are provided as well, the barycenter of the positions at which the plurality of stroke sensors 40a, 40b and 40c are arranged desirably coincides with the center of the cross section of the slave cylinder sliding portion 36b, taken perpendicularly to the direction in which the slave cylinder sliding portion 36b operates. Here, the barycenter of the positions at which the plurality of stroke sensors 40a and 40b are arranged or at which the plurality of stroke sensors 40a, 40b and 40c are arranged indicates the barycenter of a figure formed by connecting the positions at which a plurality of sensors are arranged. When the number of sensors is two, the barycenter is a median point of a line segment. When the number of sensors is three, the barycenter is a barycenter of a triangle.

In addition, the ECU 100 detects a position of the slave cylinder sliding portion 36b in the direction in which the slave cylinder sliding portion 36b operates on the basis of detected values output from the stroke sensor 40a and the stroke sensor 40b. That is, the ECU 100 may be regarded as position determination means according to the aspects of the invention. Furthermore, the ECU 100 complements errors of detected positions of the slave cylinder sliding portion 36b using the positions of the slave cylinder sliding portion 36b measured respectively by the stroke sensor 40a and the stroke sensor 40b that are arranged at positions rotated by certain degrees away from each other about the center of the cross section of the slave cylinder sliding portion 36b to accurately detect a position of the slave cylinder sliding portion 36b, thus reducing the errors. In addition, the ECU 100 controls a fluid switching valve in the hydraulic fluid passage 52 through the accurate position detection to control the position at which the slave cylinder sliding portion 36b operates.

Next, stroke position detection when the slave cylinder sliding portion 36b is inclined because of manufacturing variations of the diaphragm spring 35 will be described.

FIG 5 is a graph that shows theoretically detected stroke positions when the slave cylinder sliding portion is uniformly inclined. As shown in FIG 5, when the slave cylinder sliding portion 36b is uniformly inclined, the stroke positions form a complete sine curve. When detected values are directly used as stroke positions, large errors are included in the stroke positions at peaks and valleys of the sine curve.

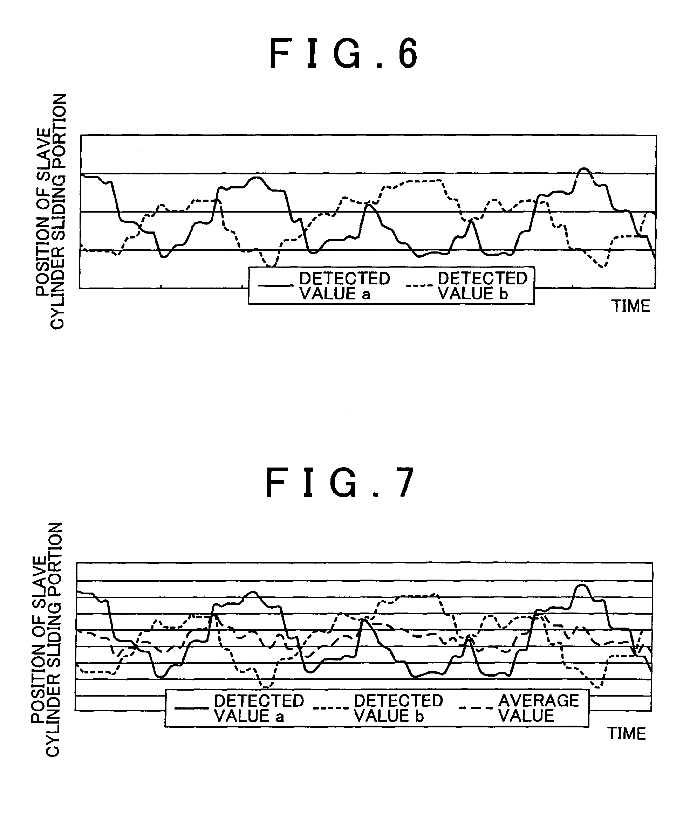

FIG. 6 is a graph that shows stroke positions detected by the stroke sensors in an actual vehicle. As shown in FIG 6, vertical variations are also present at stroke positions detected by the stroke sensor 40a and the stroke sensor 40b; however, curves are approximate to sine curves as a whole. In addition, the sine curves of the values detected respectively by the stroke sensor 40a and the stroke sensor 40b are shifted from each other. This is because the diaphragm spring 35 rotates. When the diaphragm spring 35 rotates by 120 degrees, values similar to the values detected by the stroke sensor 40a are detected by the stroke sensor 40b.

Then, in the present embodiment, values detected by the stroke sensor 40a and the stroke sensor 40b are composed and averaged to thereby reduce errors in position detection. The principles of attenuation theory of vibrations using an average is as follows. Note that in the following description, the following general formula of composition of sine waves is used. $\sin x + \sin y = 2\sin\{(x + y)/2\}\cos\{(x - y)/2\}$

Because the stroke sensor 40a and the stroke sensor 40b are arranged at positions rotated by 120 degrees from each other, $x = \theta$ and $y = \theta + 120°$ and then the following mathematical expression may be obtained. $\sin\theta + \sin(\theta + 120°) = 2\sin\{(2\theta + 120°)/2\}\cos\{120°/2\} = 2\sin\{\theta + 60°\}\cos 60° = 2\sin\{\theta + 60°\}\times 1/2 = \sin\{\theta + 60°\}$

To obtain an average, the following mathematical expression holds. $1/2\{\sin\theta + \sin(\theta + 120°)\} = 1/2\sin\{\theta + 60°\}$ Thus, the original amplitude 1 is averaged to obtain the amplitude 1/2, so it is possible to reduce noise.

In addition, by calculating the average of the detected values, the phase of vibrations shifts by 60 degrees (median phase between the stroke sensor 40a and the stroke sensor 40b). However, the stroke sensor 40 of the slave cylinder 36 senses a linear motion and, therefore, a shift in phase is not problematic.

FIG 7 is a graph that shows noise attenuation data obtained by averaging stroke position values detected by two stroke sensors. As shown in FIG 7, in comparison with the stroke positions detected respectively by the stroke sensor 40a and the stroke sensor 40b, values obtained by taking an average of two detected values have apparently a small (1/2) error range.

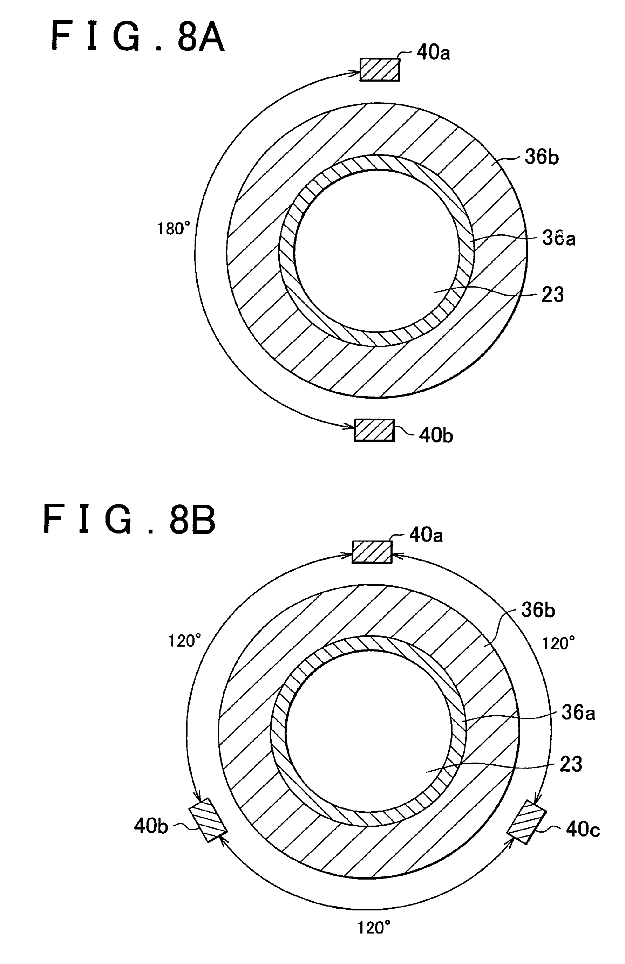

FIG 8A and FIG 8B each show an arrangement view in which a plurality of stroke sensors are arranged so that the barycenter of positions of the plurality of stroke sensors coincides with the center of the cross section of the slave cylinder sliding portion 36b. FIG 8A is an arrangement view when two stroke sensors are arranged at positions rotated by 180 degrees.

When the two stroke sensors 40a and 40b are arranged at positions rotated by 180 degrees, the following mathematical expression holds on the basis of the above described calculation formula. $\sin\theta + \sin(\theta + 180°) = 2\sin\{(2\theta + 180°)/2\}\cos\{180°/2\} = 2\sin\{\theta + 90°\}\cos 90° = 0$ Thus, the average is also zero, so it is possible to completely remove noise theoretically.

In this way, when the stroke sensor 40a and the stroke sensor 40b are arranged at positions rotated by 180 degrees, noise reduction rate is maximum. However, even when there are restrictions on arrangement positions that the stroke sensor 40a and the stroke sensor 40b cannot be arranged at positions rotated by 180 degrees, it is possible to reduce noise depending on the condition of arrangement as described above.

As described above, the stroke position detector according to the present embodiment includes the stroke sensor 40a and the stroke sensor 40b that are arranged at different positions in a plane perpendicular to a direction in which the slave cylinder sliding portion 36b operates. Thus, even when a plane perpendicular to the direction in which the slave cylinder sliding portion 36b operates is inclined, positions at which the slave cylinder sliding portion 36b operates may be measured respectively by the stroke sensor 40a and the stroke sensor 40b that are arranged at different angular positions about the center of the cross section of the slave cylinder sliding portion 36b. Hence, errors in detecting a position of the slave cylinder sliding portion 36b due to the inclined slave cylinder sliding portion 36b are complemented by a plurality of detected results to accurately detect a position of the slave cylinder sliding portion 36b, thus making it possible to reduce errors.

In addition, in the stroke position detector according to the present embodiment, the stroke sensor 40a and the stroke sensor 40b have position determination references in the same plane perpendicular to the direction in which the slave cylinder sliding portion 36b operates. Thus, it is possible to accurately detect a position of the slave cylinder sliding portion 36b by easily absorbing errors.

Furthermore, in the stroke position detector according to the present embodiment, the stroke sensor 40a and the stroke sensor 40b are provided in the same plane perpendicular to the direction in which the slave cylinder sliding portion 36b operates. Thus, a runout of the slave cylinder sliding portion 36b in the same plane may be detected at a plurality of positions. Hence, errors are easily absorbed to accurately detect a position of the slave cylinder sliding portion 36b, thus making it possible to reduce errors.

Furthermore, in the stroke position detector according to the present embodiment, the barycenter of the positions at which the stroke sensor 40a and the stroke sensor 40b are arranged coincides with the center of the cross section of the slave cylinder sliding portion 36b. Thus, the results detected by the plurality of stroke sensors cancel errors due to a runout of the slave cylinder sliding portion 36b each other to accurately detect the position of the slave cylinder sliding portion 36b, thus making it possible to reduce errors.

FIG. 8B is an arrangement view when three stroke sensors are arranged at positions rotated by 120 degrees. Here, the stroke sensor 40c, as well as the stroke sensor 40a and the stroke sensor 40b, outputs a detected value corresponding to a position in a direction in which the slave cylinder sliding portion 36b operates. In addition, the stroke sensor 40a, the stroke sensor 40b and the stroke sensor 40c are provided in substantially the same plane perpendicular to the direction in which the slave cylinder sliding portion 36b operates.

In addition, the ECU 100 detects a position of the slave cylinder sliding portion 36b in the direction in which the slave cylinder sliding portion 36b operates on the basis of a detected value output from the stroke sensor 40c, as well as the detected values output from the stroke sensor 40a and the stroke sensor 40b. Furthermore, the ECU 100 complements errors in detected positions of the slave cylinder sliding portion 36b using the detected positions of the slave cylinder sliding portion 36b measured respectively by the stroke sensor 40a, the stroke sensor 40b and the stroke sensor 40c one another to accurately detect the position of the slave cylinder sliding portion 36b, thus reducing the errors.

When the three stroke sensors 40a, 40b and 40c are arranged at positions rotated by 120 degrees, the following mathematical expression holds on the basis of the above described calculation formula.

$$\sin\theta + \sin(\theta + 120°) + \sin(\theta + 240°) = 0$$

Thus, the average is also zero, so, in this case as well, it is possible to completely remove noise theoretically.

As described above, in the stroke position detector according to the present embodiment, the barycenter of positions at which the stroke sensor 40a, the stroke sensor 40b and the stroke sensor 40c coincides with the center of the cross section of the slave cylinder sliding portion 36b. Thus, the results detected by the plurality of stroke sensors cancel errors due to a runout of the slave cylinder sliding portion 36b one another to accurately detect the position of the slave cylinder sliding portion 36b, thus making it possible to reduce errors.

As described above, the piston position detector according to the aspects of the invention is able to measure positions, at which a piston operates, respectively by detecting units arranged at different angular positions about the center of the cross section of the piston even when the piston operates while being inclined with respect to a plane perpendicular to the direction in which the piston operates. As a result, for example, when errors in piston position detection due to the inclined piston are complemented by a plurality of detected results, it is advantageously possible to accurately detect a position of the piston and reduce the errors. Thus, it is useful as a piston position detector, or the like, that reduces errors in piston position detection.

## Claims

1. A piston position detector **characterized by** comprising:

   detecting means (40) having a plurality of detecting units, each of which outputs a detected value corresponding to a position of a piston (36b) in a direction in which the piston (36b) operates; and
   position determination means (100) that determines the position of the piston in the direction in which the piston operates on the basis of the detected values output respectively from the plurality of detecting units, wherein the plurality of detecting units include a first detecting unit (40a) and a second detecting unit (40b) that are arranged at different positions in a plane perpendicular to the direction in which the piston operates.

2. The piston position detector according to claim 1, wherein
   the first detecting unit (40a) and the second detecting unit (40b) each output a detected value corresponding to a position of a common position determination reference plane provided on the piston.

3. The piston position detector according to claim 1 or 2, wherein
   the first detecting unit (40a) and the second detecting unit (40b) are provided in substantially the same plane perpendicular to the direction in which the piston (36b) operates.

4. The piston position detector according to claim 3, wherein
   the barycenter of positions of the plurality of detecting units (40) provided in substantially the same plane perpendicular to the direction in which the piston (36b) operates coincides with the center of a cross section of the piston, the cross section being perpendicular to the direction in which the piston operates.

5. The piston position detector according to any one of claims 1 to 4, wherein
   the plurality of detecting units (40) are only the first detecting unit (40a) and the second detecting unit (40b).

6. The piston position detector according to claim 5, wherein
   the first detecting unit (40a) and the second detecting unit (40b) are provided at positions rotated by 120 degrees about the center of a cross section of the piston (36b), the cross section being perpendicular to the direction in which the piston operates.

7. The piston position detector according to claim 5, wherein
   the first detecting unit (40a) and the second detecting unit (40b) are provided at positions rotated by 180 degrees about the center of a cross section of the piston (36b), the cross section being perpendicular to the direction in which the piston operates.

8. The piston position detector according to any one of claims 1 to 4, wherein
   the number of the plurality of detecting units (40a, 40b, 40c) is three, and the plurality of detecting units (40a, 40b, 40c) are respectively provided at positions rotated by 120 degrees about the center of a cross section of the piston (36b), the cross section being perpendicular to the direction in which the piston operates.

9. The piston position detector according to any one of claims 1 to 8, wherein
the position determination means (100) determines an average value of the plurality of detected values as the position of the piston (36b).

10. A cylinder controller comprising:

a slave cylinder proximal portion (36a);
a hydraulic fluid chamber (36d) provided between the slave cylinder proximal portion (36a) and the piston (36b) of which a position is detected by the piston position detector according to any one of claims 1 to 9;
a hydraulic fluid passage (52) through which hydraulic fluid is supplied to the hydraulic fluid chamber;
a valve that is provided in the hydraulic fluid passage (52) and that adjusts an amount of hydraulic fluid to slide the piston (36b) inside the slave cylinder proximal portion (36a); and
control means (110) that controls the valve on the basis of the determined position of the piston.

11. A clutch comprising:

a diaphragm (35) that has a plurality of lingual fingers extending radially toward a center of the diaphragm (35); and
the piston (36b) of which a position is detected by the piston position detector according to any one of claims 1 to 9, wherein
the piston (36b) is provided so as to be in contact with distal ends (35b) of the plurality of lingual fingers.

12. A vehicle comprising:

an engine (11);
an automatic transmission (12);
the clutch (30) according to claim 11; and
control means (110) that automatically controls the clutch on the basis of a gear shift request from a driver.

# FIG.1

EP 2 128 456 A2

# FIG. 2

ECU
100

ENGINE ←

TRANSMISSION →

HYDRAULIC SOURCE
51

EP 2 128 456 A2

# F I G . 3

# F I G . 4

# F I G . 5

# F I G . 6

POSITION OF SLAVE
CYLINDER SLIDING PORTION

| —— DETECTED VALUE a | ---- DETECTED VALUE b |

TIME

# F I G . 7

POSITION OF SLAVE
CYLINDER SLIDING PORTION

| —— DETECTED VALUE a | ---- DETECTED VALUE b | --- AVERAGE VALUE |

TIME

# FIG.8A

40a

180°

36b

36a

23

40b

# FIG.8B

40a

120°

36b

120°

40b

36a

23

40c

120°

# FIG.9

## RELATED ART

EP 2 128 456 A2

# F I G . 10

## RELATED ART

235

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8145611 A